# EUROPÄISCHE PATENTANMELDUNG

(11) **EP 1 522 548 A1**
(43) Veröffentlichungstag der Anmeldung: **13.04.2005**
(21) Anmeldenummer: 04103925.6
(22) Anmeldetag: 16.08.2004
(51) Int. Cl.: C08G 18/18, C08G 18/79, C09D 175/04

(54) **Uretdiongruppenhaltige Polyurethanzusammensetzungen, welche bei niedriger Temperatur härtbar sind**

(30) Priorität: 09.10.2003 DE 10346958
(71) Anmelder: Degussa AG, 40474 Düsseldorf (DE)
(72) Erfinder: Spyrou, Emmanouil, Dr., 46282, Dorsten (DE); Loesch, Holger, 44627, Herne (DE); Hoppe, Dirk, Dr., 48301, Nottuln (DE)

(57) **Zusammenfassung**

Die Erfindung betrifft uretdiongruppenhaltige Polyurethanzusammensetzungen, insbesondere für Polyurethan-Pulverlack- und Klebstoffzusammensetzungen, welche bei niedriger Temperatur härtbar sind, ein Verfahren zu ihrer Herstellung sowie ihre Verwendung.

## Beschreibung

Die Erfindung betrifft uretdiongruppenhaltige Polyurethanzusammensetzungen, insbesondere für Polyurethan-Pulverlack- und Klebstoffzusammensetzungen, welche bei niedriger Temperatur härtbar sind, ein Verfahren zu ihrer Herstellung sowie ihre Verwendung.

Bei Raumtemperatur feste, extern oder intern blockierte Polyisocyanate stellen wertvolle Vernetzer für thermisch vernetzbare Polyurethan (PUR)-Pulverlack- und Klebstoffzusammensetzungen dar.

So beschreibt z. B. die DE-OS 27 35 497 PUR-Pulverlacke mit hervorragender Witterungs- und Wärmestabilität. Die Vernetzer, deren Herstellung in der DE-OS 27 12 931 beschrieben wird, bestehen aus mit ε-Caprolactam blockiertem, Isocyanuratgruppen enthaltendem Isophorondiisocyanat. Es sind auch urethan-, biuret- oder harnstoffgruppenhaltige Polyisocyanate bekannt, deren Isocyanatgruppen ebenfalls blockiert sind.

Der Nachteil dieser extern blockierten Systeme besteht in der Abspaltung des Blockierungsmittels während der thermischen Vernetzungsreaktion. Da das Blockierungsmittel somit in die Umwelt emittieren kann, müssen aus ökologischen und arbeitshygienischen Gründen besondere Vorkehrungen zur Reinigung der Abluft und Wiedergewinnung des Blockierungsmittels getroffen werden. Zudem weisen die Vernetzer eine geringe Reaktivität auf. Es sind Härtungstemperaturen oberhalb von 170 °C erforderlich.

Die DE-OS 30 30 539 und DE-OS 30 30 572 beschreiben Verfahren zur Herstellung von uretdiongruppenhaltigen Polyadditionsverbindungen, deren terminale Isocyanatgruppen mit Monoalkoholen oder Monoaminen irreversibel blockiert sind. Nachteilig sind insbesondere die Ketten abbrechenden Bestandteile der Vernetzer, die zu geringen Netzwerkdichten der PUR-Pulverlackbeschichtungen und damit zu mäßigen Lösemittelbeständigkeiten führen.
Hydroxylgruppenterminierte, uretdiongruppenhaltige Polyadditionsverbindungen sind Gegenstand der EP 0 669 353. Sie weisen aufgrund ihrer Funktionalität von zwei eine verbesserte Resistenz gegenüber Lösemitteln auf. Den Pulverlackzusammensetzungen auf Basis dieser uretdiongruppenhaltigen Polyisocyanate ist gemeinsam, dass sie bei der Härtungsreaktion keine flüchtigen Verbindungen emittieren. Allerdings liegen die Einbrenntemperaturen mit mindestens 180 °C auf hohem Niveau.

Der Einsatz von Amidinen als Katalysatoren in PUR-Pulverlackzusammensetzungen wird in der EP 0 803 524 beschrieben. Diese Katalysatoren führen zwar zu einer Erniedrigung der Aushärtungstemperatur, zeigen aber eine beträchtliche Vergilbung, die im Beschichtungsbereich allgemein unerwünscht ist. Ursache dieser Vergilbung sind vermutlich die reaktiven Stickstoffatome in den Amidinen. Diese können sich mit Luftsauerstoff zu N-Oxiden umsetzen, die für die Verfärbung verantwortlich sind.

In der EP 0 803 524 werden auch andere Katalysatoren erwähnt, die bislang für diesen Zweck verwendet wurden, ohne aber eine besondere Wirkung auf die Aushärtetemperatur zu zeigen. Dazu gehören die aus der Polyurethan-Chemie bekannten metallorganischen Katalysatoren, wie z. B. Dibutylzinndilaurat (DBTL), oder aber tertiäre Amine, wie z. B. 1,4-Diazabicylco[2.2.2]octan (DABCO).

In der WO 00/34355 werden Katalysatoren auf der Basis von Metallacetylacetonaten, z. B. Zinkacetylacetonat, beansprucht. Solche Katalysatoren sind tatsächlich in der Lage, die Aushärtungstemperatur von uretdiongruppenhaltigen Polyurethan-Pulverlackzusammensetzungen zu erniedrigen, zeigen als Reaktionsprodukte aber hauptsächlich Allophanate (M. Gedan-Smolka, F. Lehmann, D. Lehmann "New catalysts for the low temperature curing of uretdione powder coatings" *International Waterborne, High solids and Powder Coatings Symposium, New Orleans,* 21. - 23.02.2001). Allophanate sind die Umsetzungsprodukte aus einem Mol Alkohol und zwei Mol Isocyanat, während sich in der herkömmlichen Urethanchemie ein Mol Alkohol mit einem Mol Isocyanat umsetzt. Durch die unerwünschte Allophanatbildung werden also technisch wie ökonomisch wertvolle Isocyanatgruppen vernichtet.

Aufgabe der vorliegenden Erfindung war es daher, hochreaktive uretdiongruppenhaltige Polyurethanzusammensetzungen zu finden, die sich bereits bei sehr niedrigen Temperaturen aushärten lassen und sich insbesondere zur Herstellung von Kunststoffen sowie von hochglänzenden oder matten, licht- und wetterstabilen Pulverlackbeschichtungen und Klebstoffen eignen.

Überraschend wurde gefunden, dass bestimmte Katalysatoren die Rückspaltung von Uretdiongruppen so stark beschleunigen, so dass sich bei Verwendung uretdiongruppenhaltiger Härter die Aushärtetemperatur von Pulverlack- bzw. Klebstoffzusammensetzungen beträchtlich erniedrigen lässt.

Herkömmliche uretdionhaltige Lack- bzw. Klebstoffzusammensetzungen lassen sich unter normalen Bedingungen (DBTL-Katalyse) erst ab 180 °C aushärten. Mit Hilfe der erfindungsgemäßen bei Niedrigtemperatur härtenden Lack- bzw. Klebstoffzusammensetzungen kann bei 100 bis 160 °C Aushärtungstemperatur nicht nur Energie und Aushärtungszeit gespart werden, sondern es lassen sich auch viele temperatursensible Substrate beschichten bzw. verkleben, die bei 180°C unerwünschte Vergilbungs-, Zersetzungs- und/oder Versprödungserscheinungen zeigen würden. Neben Metall, Glas, Holz, Leder, Kunststoffen und MDF-Platten sind auch bestimmte Aluminiumuntergründe prädestiniert. Bei letzteren führt eine zu hohe Temperaturbelastung mitunter zu einer unerwünschten Änderung der Kristallstruktur.

Gegenstand der vorliegenden Erfindung sind hochreaktive uretdiongruppenhaltige Polyurethanzusammensetzungen mit einem Schmelzpunkt oberhalb von 40 °C, im Wesentlichen enthaltend
A) mindestens einen uretdiongruppenhaltigen Härter, basierend auf aliphatischen, (cyclo)aliphatischen und/oder cycloaliphatischen Polyisocyanaten und hydroxylgruppenhaltigen Verbindungen mit einem freien NCO-Gehalt von kleiner 5 Gew.-% und einem Uretdiongehalt von 1 bis 18 Gew.-%
   und
B) mindestens einen Katalysator aus der Gruppe der Katalysatoren
   1. der Formel [NR¹R²R³R⁴]⁺ [R⁵COO]⁻, wobei R¹ bis R⁴ gleichzeitig oder unabhängig voneinander Alkyl-, Aryl-, Aralkyl-, Heteroaryl-, Alkoxyalkylreste, jeweils linear oder verzweigt, unverbrückt oder mit anderen Resten R¹ bis R⁴ verbrückt, unter Ausbildung von Cyclen, Bicyclen oder Tricyclen und die Verbrückungsatome neben Kohlenstoff auch Heteroatome sein können, mit 1 bis 18 Kohlenstoffatomen bedeuten und jeder Rest R¹ bis R⁴ zusätzlich noch eine oder mehrere Alkohol-, Amino-, Ester-, Keto-, Thio-, Urethan-, Harnstoff-, Allophanatgruppen, Doppelbindungen, Dreifachbindungen oder Halogenatome aufweisen kann, und R⁵ ein Alkyl-, Aryl-, Aralkyl-, Heteroaryl-, Alkoxyalkylrest, linear oder verzweigt, mit 1 bis 18 Kohlenstoffatomen darstellt und zusätzlich noch eine oder mehrere Alkohol-, Amino-, Ester-, Keto-, Thio-, Säure-, Urethan-, Harnstoff-, Allophanatgruppen, Doppelbindungen, Dreifachbindungen oder Halogenatome aufweisen kann,
   2. der Formel [NR¹R²R³R⁴]⁺ [R⁵]⁻, wobei R¹ bis R⁴ gleichzeitig oder unabhängig voneinander Alkyl-, Aryl-, Aralkyl-, Heteroaryl-, Alkoxyalkylreste, jeweils linear oder verzweigt, unverbrückt oder mit anderen Resten R¹ bis R⁴ verbrückt, unter Ausbildung von Cyclen, Bicyclen oder Tricyclen und die Verbrückungsatome neben Kohlenstoff auch Heteroatome sein können, mit 1 bis 18 Kohlenstoffatomen darstellen und jeder Rest R¹ bis R⁴ zusätzlich noch eine oder mehrere Alkohol-, Amino-, Ester-, Keto-, Thio-, Säure-, Urethan-, Harnstoff-, Allophanatgruppen, Doppelbindungen, Dreifachbindungen oder Halogenatome aufweisen kann, und R⁵ entweder OH oder F bedeutet,
   3. der Formel M (OR¹)ₙ (OR²)ₘ (OR³)ₒ (OR⁴)ₚ (OR⁵)_{q} (OR⁶)ᵣ, wobei M ein Metall in beliebiger positiver Oxidationsstufe und identisch mit der Summe n+m+o+p+q+r ist, m, o, p, q, r ganze Zahlen von 0 bis 6 darstellen und für die Summe n+m+o+p+q+r = 1 bis 6 gilt, die Reste R¹ bis R⁶ gleichzeitig oder unabhängig voneinander Wasserstoff oder Alkyl-, Aryl-, Aralkyl-, Heteroaryl-, Alkoxyalkylreste mit 1 bis 8 Kohlenstoffatomen bedeuten und die Reste jeweils linear oder verzweigt, unverbrückt oder mit anderen Resten verbrückt, unter Ausbildung von Cyclen, Bicyclen oder Tricyclen und die Verbrückungsatome neben Kohlenstoff auch Heteroatome sein können und zusätzlich noch eine oder mehrere Alkohol-, Amino-, Ester-, Keto-, Thio-, Säure-, Urethan-, Harnstoff-, Allophanatgruppen, Doppelbindungen, Dreifachbindungen oder Halogenatome aufweisen können
   wobei diese Katalysatoren aus den Gruppen 1 bis 3 einzeln oder in Mischungen mit einer inerten Hülle umgeben und damit verkapselt sein können;
C) gegebenenfalls mindestens ein hydroxylgruppenhaltiges oder amingruppenhaltiges Polymer mit einer OH-Zahl zwischen 20 und 500 mg KOH/Gramm bzw. einem vergleichbaren Amingehalt;
D) gegebenenfalls mindestens eine gegenüber Säuregruppen reaktive Verbindung mit einem Gewichtsanteil, bezogen auf die Gesamtformulierung, von 0,1 bis 10 %;
E) gegebenenfalls mindestens eine Säure in monomerer oder polymerer Form in einem Gewichtsanteil, bezogen auf die Gesamtformulierung, von 0,1 bis 10 %;
F) gegebenenfalls Hilfs- und Zusatzstoffe;
wobei der Anteil des Katalysators unter B) 0,001 bis 5 Gew.-% an der Gesamtmenge der Komponenten beträgt, und die beiden Komponenten A) und sofern vorhanden C) in dem Verhältnis vorliegen, dass auf jede Hydroxylgruppe bzw. Amingruppe der Komponente C) mehr als 1 Uretdiongruppe der Komponente A) entfällt.

Gegenstand der Erfindung ist auch die Verwendung der erfindungsgemäßen Polyurethanzusammensetzungen zur Herstellung von Lackbeschichtungen auf Metall-, Kunststoff-, Glas-, Holz-, oder Ledersubstraten oder sonstigen hitzeresistenten Untergründen.

Gegenstand der Erfindung ist auch die Verwendung der erfindungsgemäßen Polyurethanzusammensetzungen zur Herstellung von Verklebungen von Metall-, Kunststoff-, Glas-, Holz-, oder Ledersubstraten oder sonstigen hitzeresistenten Untergründen.

Ebenfalls Gegenstand der Erfindung sind Metallbeschichtungszusammensetzungen, insbesondere für Automobilkarossen, Motor- und Fahrräder, Gebäudeteile und Haushaltsgeräte, Holzbeschichtungszusammensetzungen, Glasbeschichtungszusammensetzungen, Lederbeschichtungszusammensetzungen und Kunststoffbeschichtungszusammensetzungen.

Uretdiongruppen enthaltende Polyisocyanate sind wohlbekannt und werden beispielsweise in US 4 476 054, US 4 912 210, US 4 929 724 sowie EP 0 417 603 beschrieben. Einen umfassenden Überblick über industriell relevante Verfahren zur Dimerisierung von Isocyanaten zu Uretdionen liefert das J. Prakt. Chem. 336 (1994) 185-200. Im Allgemeinen erfolgt die Umsetzung von Isocyanaten zu Uretdionen in Gegenwart löslicher Dimerisierungskatalysatoren, wie z. B. Dialkylaminopyridinen, Trialkylphosphinen, Phosphorigsäure-triamiden oder Imdidazolen. Die Reaktion - optional in Lösemitteln, bevorzugt aber in Abwesenheit von Lösemitteln durchgeführt - wird bei Erreichen eines gewünschten Umsatzes durch Zusatz von Katalysatorgiften abgestoppt. Überschüssiges monomeres Isocyanat wird im Anschluss durch Kurzwegverdampfung abgetrennt. Ist der Katalysator flüchtig genug, kann das Reaktionsgemisch im Zuge der Monomerabtrennung vom Katalysator befreit werden. Auf den Zusatz von Katalysatorgiften kann in diesem Fall verzichtet werden. Grundsätzlich ist zur Herstellung von Uretdiongruppen enthaltenden Polyisocyanaten eine breite Palette von Isocyanaten geeignet. Erfindungsgemäß werden Isophorondiisocyanat (IPDI), Hexamethylendiisocyanat (HDI), 2-Methylpentandiisocyanat (MPDI), 2,2,4-Trimethylhexamethylendiisocyanat/2,4,4-Trimethylhexamethylendiisocyanat (TMDI), Norbornandiisocyanat (NBDI), Methylendiphenyldiisocyanat (MDI) und Tetramethylxylylendiisocyanat (TMXDI) bevorzugt verwendet. Ganz besonders bevorzugt werden IPDI und HDI.

Die Umsetzung dieser Uretdiongruppen tragenden Polyisocyanate zu Uretdiongruppen aufweisenden Härtern A) beinhaltet die Reaktion der freien NCO-Gruppen mit hydroxylgruppenhaltigen Monomeren oder Polymeren, wie z. B. Polyestern, Polythioethern, Polyethern, Polycaprolactamen, Polyepoxiden, Polyesteramiden, Polyurethanen oder nieder-molekularen Di-, Tri- und/oder Tetraalkoholen als Kettenverlängerer und gegebenenfalls Monoaminen und/oder Monoalkoholen als Kettenabbrecher und wurde schon häufig beschrieben (EP 0 669 353, EP 0 669 354, DE 30 30 572, EP 0 639 598 oder EP 0 803 524). Bevorzugte Uretdiongruppen aufweisende Härter A) haben einen freien NCO-Gehalt von weniger als 5 Gew.-% und einen Gehalt an Uretdiongruppen von 1 bis 18 Gew.-% (berechnet als C₂N₂O₂, Molekulargewicht 84). Bevorzugt werden Polyester und monomere Dialkohole. Außer den Uretdiongruppen können die Lack- bzw. Klebstoffhärter auch Isocyanurat-, Biuret-, Allophanat-, Urethan- und/oder Harnstoff-Strukturen aufweisen.

Gegenstand der Erfindung ist auch die Verwendung mindestens eines Katalysators aus der Gruppe der Katalysatoren
1. der Formel [NR¹R²R³R⁴]⁺ [R⁵COO]⁻, wobei R¹ bis R⁴ gleichzeitig oder unabhängig voneinander Alkyl-, Aryl-, Aralkyl-, Heteroaryl-, Alkoxyalkylreste, jeweils linear oder verzweigt, unverbrückt oder mit anderen Resten R¹ bis R⁴ verbrückt, unter Ausbildung von Cyclen, Bicyclen oder Tricyclen und die Verbrückungsatome neben Kohlenstoff auch Heteroatome sein können, mit 1 bis 18 Kohlenstoffatomen bedeuten und jeder Rest R¹ bis R⁴ zusätzlich noch eine oder mehrere Alkohol-, Amino-, Ester-, Keto-, Thio-, Urethan-, Harnstoff-, Allophanatgruppen, Doppelbindungen, Dreifachbindungen oder Halogenatome aufweisen kann, und R⁵ ein Alkyl-, Aryl-, Aralkyl-, Heteroaryl-, Alkoxyalkylrest, linear oder verzweigt, mit 1 bis 18 Kohlenstoffatomen darstellt und zusätzlich noch eine oder mehrere Alkohol-, Amino-, Ester-, Keto-, Thio-, Säure-, Urethan-, Harnstoff-, Allophanatgruppen, Doppelbindungen, Dreifachbindungen oder Halogenatome aufweisen kann,
2. der Formel [NR¹R²R³R⁴]⁺ [R⁵]⁻, wobei R¹ bis R⁴ gleichzeitig oder unabhängig voneinander Alkyl-, Aryl-, Aralkyl-, Heteroaryl-, Alkoxyalkylreste, jeweils linear oder verzweigt, unverbrückt oder mit anderen Resten R¹ bis R⁴ verbrückt, unter Ausbildung von Cyclen, Bicyclen oder Tricyclen und die Verbrückungsatome neben Kohlenstoff auch Heteroatome sein können, mit 1 bis 18 Kohlenstoffatomen darstellen und jeder Rest R¹ - R⁴ zusätzlich noch eine oder mehrere Alkohol-, Amino-, Ester-, Keto-, Thio-, Säure-, Urethan-, Harnstoff-, Allophanatgruppen, Doppelbindungen, Dreifachbindungen oder Halogenatome aufweisen kann, und R⁵ entweder OH oder F bedeutet,
3. der Formel M (OR¹)ₙ (OR²)ₘ (OR³)ₒ (OR⁴)ₚ (OR⁵)_{q} (OR⁶)ᵣ , wobei M ein Metall in beliebiger positiver Oxidationsstufe und identisch mit der Summe n+m+o+p+q+r ist, m, o, p, q, r ganze Zahlen von 0 bis 6 darstellen und für die Summe n+m+o+p+q+r = 1 bis 6 gilt, die Reste R¹ bis R⁶ gleichzeitig oder unabhängig voneinander Wasserstoff oder Alkyl-, Aryl-, Aralkyl-, Heteroaryl-, Alkoxyalkylreste, mit 1 bis 8 Kohlenstoffatomen bedeuten und die Reste jeweils linear oder verzweigt, unverbrückt oder mit anderen Resten verbrückt, unter Ausbildung von Cyclen, Bicyclen oder Tricyclen und die Verbrückungsatome neben Kohlenstoff auch Heteroatome sein können und zusätzlich noch eine oder mehrere Alkohol-, Amino-, Ester-, Keto-, Thio-, Säure-, Urethan-, Harnstoff-, Allophanatgruppen, Doppelbindungen, Dreifachbindungen oder Halogenatome aufweisen können,
in festen Polyurethan-Lack- bzw. Klebstoffzusammensetzungen.

Die erfindungswesentlichen Katalysatoren B) genügen
1. der Formel [NR¹R²R³R⁴]⁺ [R⁵COO]⁻, wobei R¹ bis R⁴ gleichzeitig oder unabhängig voneinander Alkyl-, Aryl-, Aralkyl-, Heteroaryl-, Alkoxyalkylreste, jeweils linear oder verzweigt, unverbrückt oder mit anderen Resten R¹ bis R⁴ verbrückt, unter Ausbildung von Cyclen, Bicyclen oder Tricyclen und die Verbrückungsatome neben Kohlenstoff auch Heteroatome sein können, mit 1 bis 18 Kohlenstoffatomen bedeuten und jeder Rest R¹ bis R⁴ zusätzlich noch eine oder mehrere Alkohol-, Amino-, Ester-, Keto-, Thio-, Urethan-, Harnstoff-, Allophanatgruppen, Doppelbindungen, Dreifachbindungen oder Halogenatome aufweisen kann, und R⁵ ein Alkyl-, Aryl-, Aralkyl-, Heteroaryl-, Alkoxyalkylrest, linear oder verzweigt, mit 1 bis 18 Kohlenstoffatomen darstellt und zusätzlich noch eine oder mehrere Alkohol-, Amino-, Ester-, Keto-, Thio-, Säure-, Urethan-, Harnstoff-, Allophanatgruppen, Doppelbindungen, Dreifachbindungen oder Halogenatome aufweisen kann, oder
2. der Formel [NR¹R²R³R⁴]⁺ [R⁵]⁻, wobei R¹ bis R⁴ gleichzeitig oder unabhängig voneinander Alkyl-, Aryl-, Aralkyl-, Heteroaryl-, Alkoxyalkylreste, jeweils linear oder verzweigt, unverbrückt oder mit anderen Resten R¹ bis R⁴ verbrückt, unter Ausbildung von Cyclen, Bicyclen oder Tricyclen und die Verbrückungsatome neben Kohlenstoff auch Heteroatome sein können, mit 1 bis 18 Kohlenstoffatomen darstellen und jeder Rest R¹ bis R⁴ zusätzlich noch eine oder mehrere Alkohol-, Amino-, Ester-, Keto-, Thio-, Säure-, Urethan-, Harnstoff-, Allophanatgruppen, Doppelbindungen, Dreifachbindungen oder Halogenatome aufweisen kann, und R⁵ entweder OH oder F bedeutet, oder
3. der Formel M (OR¹)ₙ (OR²)ₘ (OR³)ₒ (OR⁴)ₚ (OR⁵)_{q} (OR⁶)ᵣ, wobei M ein Metall in beliebiger positiver Oxidationsstufe und identisch mit der Summe n+m+o+p+q+r ist, m, o, p, q, r ganze Zahlen von 0 bis 6 darstellen und für die Summe n+m+o+p+q+r = 1 bis 6 gilt, die Reste R¹ bis R⁶ gleichzeitig oder unabhängig voneinander Wasserstoff oder Alkyl-, Aryl-, Aralkyl-, Heteroaryl-, Alkoxyalkylreste, mit 1 bis 8 Kohlenstoffatomen bedeuten und die Reste jeweils linear oder verzweigt, unverbrückt oder mit anderen Resten verbrückt, unter Ausbildung von Cyclen, Bicyclen oder Tricyclen und die Verbrückungsatome neben Kohlenstoff auch Heteroatome sein können und zusätzlich noch eine oder mehrere Alkohol-, Amino-, Ester-, Keto-, Thio-, Säure-, Urethan-, Harnstoff-, Allophanatgruppen, Doppelbindungen, Dreifachbindungen oder Halogenatome aufweisen können.

Beispiele für solche Katalysatoren unter 1. sind Tetramethylammoniumformiat, Tetramethylammoniumacetat, Tetramethylammonium-propionat, Tetramethylammoniumbutyrat, Tetramethylammoniumbenzoat, Tetraethylammoniumformiat, Tetraethylammoniumacetat, Tetraethylammoniumpropionat, Tetraethylammoniumbutyrat, Tetraethylammoniumbenzoat, Tetrapropylammoniumformiat, Tetrapropylammoniumacetat, Tetrapropylammoniumpropionat, Tetrapropylammoniumbutyrat, Tetrapropylammoniumbenzoat Tetrabutylammoniumformiat, Tetrabutylammoniumacetat, Tetrabutylammoniumpropionat, Tetrabutylammoniumbutyrat und Tetrabutylammoniumbenzoat.

Beispiele für solche Katalysatoren unter 2. sind Methyltributylammoniumhydroxid, Methyltriethylammoniumhydroxid, Tetramethylammoniumhydroxid, Tetraethylammoniumhydroxid, Tetrapropylammoniumhydroxid, Tetrabutylammoniumhydroxid, Tetrapentylammoniumhydroxid, Tetrahexylammoniumhydroxid, Tetraoctylammoniumhydroxid, Tetradecylammoniumhydroxid, Tetradecyltrihexylammoniumhydroxid, Tetraoctadecylammoniumhydroxid, Benzyltrimethylammoniumhydroxid, Benzyltriethylammoniumhydroxid, Trimethylphenylammoniumhydroxid, Triethylmethylammoniumhydroxid, Trimethylvinylammoniumhydroxid, Tetramethylammoniumfluorid, Tetraethylammoniumfluorid, Tetrabutylammoniumfluorid, Tetraoctylammoniumfluorid und Benzyltrimethylammoniumfluorid,

Beispiele für solche Katalysatoren unter 3. sind Lithiumhydroxid, Natriumhydroxid, Kaliumhydroxid, Rubidiumhydroxid, Cäsiumhydroxid, Berylliumiumhydroxid, Magnesiumhydroxid, Calziumhydroxid, Strontiumhydroxid, Bariumhydroxid, Aluminiumhydroxid, Zinkhydroxid, Lithiummethanolat, Natriummethanolat, Kaliummethanolat, Magnesiummethanolat, Calziummethanolat, Bariummethanolat, Lithiummethanolat, Natriumethanolat, Kaliumethanolat, Magnesiumethanolat, Calziumethanolat, Bariumethanolat, Lithiumpropylalkoholat, Natriumpropylalkoholat, Kaliumpropylalkoholat, Magnesiumpropylalkoholat, Calziumpropylalkoholat, Bariumpropylalkoholat, Lithiumisopropylalkoholat, Natriumisopropylalkoholat, Kaliumisopropylalkoholat, Magnesiumisopropylalkoholat, Calziumisopropylalkoholat, Bariumisopropylalkoholat, Lithium-1-butylalkoholat, Natrium-1-butylalkoholat, Kalium-1-butylalkoholat, Magnesium-1-butylalkoholat, Calzium-1-butylalkoholat, Barium-1-butylalkoholat, Lithium-2-butylalkoholat, Natrium-2-butylalkoholat, Kalium-2-butylalkoholat, Magnesium-2-butylalkoholat, Calzium-2-butylalkoholat, Barium-2-butylalkoholat, Lithiumisobutylalkoholat, Natriumisobutylalkoholat, Kaliumisobutylalkoholat, Magnesiumisobutylalkoholat, Calziumisobutylalkoholat, Bariumisobutylalkoholat, Lithium-tert.-butylalkoholat, Natrium-tert.-butylalkoholat, Kalium-tert.-butylalkoholat, Magnesium-tert.-butylalkoholat, Calzium-tert.-butylalkoholat, Barium-tert.-butylalkoholat, Lithiumphenolat, Natriumphenolat, Kaliumphenolat, Magnesiumphenolat, Calziumphenolat und Bariumphenolat.

Selbstverständlich können auch Mischungen solcher Katalysatoren verwendet werden. Die Katalysatoren sind in einer Menge von 0,001 bis 5 Gew.-%, bevorzugt 0,01 bis 3 Gew.-%, bezogen auf die Gesamtmenge der Komponenten, in der Polyurethanzusammensetzung enthalten. Die Katalysatoren können Kristallwasser enthalten, wobei dieses bei der Berechnung der eingesetzten Katalysatorenmenge nicht berücksichtigt wird, d. h. die Wassermenge wird herausgerechnet. Besonders bevorzugt werden Tetraethylammoniumbenzoat und Tetrabutylammoniumhydroxyd eingesetzt.

Eine erfindungsgemäße Variante schließt die polymere Anbindung solcher Katalysatoren C) an Lack- bzw. Klebstoffhärter A) oder hydroxylgruppenhaltige Polymere B) mit ein. So können z. B. freie Alkohol-, Thio- oder Aminogruppen der Ammoniumsalze mit Säure-, Isocyanat-, oder Glycidylgruppen der Pulverlackhärter A) oder hydroxylgruppenhaltige Polymere C) umgesetzt werden, um die Katalysatoren B) in den polymeren Verbund zu integrieren.

Bei den hydroxylgruppen- oder amingruppenhaltigen Polymeren C) werden bevorzugt Polyester, Polyether, Polyacrylate, Polyurethane, Polyamidamine, Polyether und/oder Polycarbonate mit einer OH-Zahl von 20 bis 500 (in mg KOH/Gramm) bzw. einem vergleichbaren Amingehalt eingesetzt. Besonders bevorzugt werden Polyester mit einer OH-Zahl von 30 bis 150, einem mittleren Molekulargewicht von 500 bis 6 000 g/mol. Solche Bindemittel sind beispielsweise in EP 0 669 354 und EP 0 254 152 beschrieben worden. Selbstverständlich können auch Mischungen solcher Polymere eingesetzt werden.

Beachtet werden muss in diesem Zusammenhang, dass die Aktivität dieser Katalysatoren in Anwesenheit von Säuren deutlich abnimmt. Zu den herkömmlichen Reaktionspartnern der uretdionhaltiger Lack- bzw. Klebstoffhärter gehören hydroxylgruppenhaltige Polyester. Aufgrund der Herstellungsweise von Polyestern tragen diese mitunter in geringem Umfang noch Säuregruppen. Der Gehalt der Polyester an Säuregruppen sollte unter 20 mg KOH/g betragen, da sonst die Katalysatoren zu sehr inhibiert werden. In Gegenwart von solchen Säuregruppen tragenden Polyestern bietet es sich an, die erwähnten Katalysatoren entweder im Überschuss, bezogen auf die Säuregruppen, zu verwenden, oder aber reaktive Verbindungen zuzusetzen, die in der Lage sind, Säuregruppen abzufangen. Sowohl monofunktionelle als auch mehrfachfunktionelle Verbindungen können hierzu eingesetzt werden. Die möglicherweise vernetzende Wirkung der mehrfach funktionellen Verbindungen ist aufgrund der viskositätserhöhenden Wirkung zwar unerwünscht, stört aber in der Regel wegen der geringen Konzentration nicht.

Reaktive säureabfangende Verbindungen D) sind in der Lackchemie allgemein bekannt. So setzen sich beispielsweise Epoxyverbindungen, Carbodiimide, Hydroxyalkylamide oder 2-Oxazoline, aber auch anorganische Salze, wie Hydroxide, Hydrogencarbonate oder Carbonate, mit Säuregruppen bei erhöhten Temperaturen um. In Frage kommen dabei z. B. Triglycidyletherisocyanurat (TGIC), EPIKOTE® 828 (Diglycidylether auf Basis Bisphenol A, Shell), Versaticsäureglycidylester, Ethylhexylglycidylether, Butylglycidylether, Polypox R 16 (Pentaerythrittetraglycidylether, UPPC AG) sowie andere Polypoxtypen mit freien Epoxygruppen, Vestagon EP HA 320, (Hydroxyalkylamid, Degussa AG), aber auch Phenylenbisoxazolin, 2-Methyl-2-oxazolin, 2-Hydroxyethyl-2-oxazolin, 2-Hydroxypropyl-2-oxazolin, 5-Hydroxypentyl-2-oxazolin, Natriumcarbonat und Calziumcarbonat. Selbstverständlich kommen auch Mischungen solcher Substanzen in Frage. Diese reaktive Verbindungen können in Gewichtsanteilen von 0,1 bis 10 %, bevorzugt von 0,5 bis 3 %, bezogen auf die Gesamtformulierung, eingesetzt werden.

Säuren, die unter E) genannt werden, sind alle Stoffe, fest oder flüssig, organisch oder anorganisch, monomer oder polymer, die die Eigenschaften einer Brönstedt- oder einer Lewissäure besitzen. Als Beispiele seien genannt: Schwefelsäure, Essigsäure, Benzoesäure, Malonsäure, Terephthalsäure, aber auch Copolyester oder Copolyamide mit einer Säurezahl von mindestens 20.

Für die Lack- bzw. Klebstoffherstellung können die in der Lack- bzw. Klebstofftechnologie üblichen Zusatzstoffe F) wie Verlaufsmittel, z. B. Polysilicone oder Acrylate, Lichtschutzmittel z. B. sterisch gehinderte Amine, oder andere Hilfsmittel, wie sie z. B. in EP 0 669 353 beschrieben wurden, in einer Gesamtmenge von 0,05 bis 5 Gew.-% zugesetzt werden. Füllstoffe und Pigmente, wie z. B. Titandioxid, können in einer Menge bis zu 50 Gew.-% der Gesamtzusammensetzung zugesetzt werden.

Optional können zusätzliche Katalysatoren, wie sie in der Polyurethanchemie bereits bekannt sind, enthalten sein. Es handelt sich hierbei hauptsächlich um metallorganischen Katalysatoren, wie z. B. Dibutylzinndilaurat, oder aber tertiäre Amine, wie z. B. 1,4-Diazabicylco[2,2,2,]octan, in Mengen von 0,001 bis 1 Gew.-%.

Die Homogenisierung aller Bestandteile zur Herstellung der erfindungsgemäßen Polyurethanzusammensetzung kann in geeigneten Aggregaten, wie z. B. beheizbaren Rührkesseln, Knetern, oder auch Extrudern, erfolgen, wobei Temperaturobergrenzen von 120 bis 130 °C nicht überschritten werden sollten. Die gut vermischte Masse wird durch geeignete Auftragung, z. B. Walzen, Sprühen, auf das Substrat aufgebracht. Das Auftragen von sprühfertigen Pulvern auf geeignete Substrate kann nach den bekannten Verfahren, wie z. B. durch elektrostatisches Pulversprühen, Wirbelsintern, oder elektrostatisches Wirbelsintern, erfolgen. Nach dem Auftrag werden die beschichteten Werkstücke zur Aushärtung 4 bis 60 Minuten auf eine Temperatur von 60 bis 220 °C, vorzugsweise 6 bis 30 Minuten bei 80 bis 160 °C erhitzt.

Nachfolgend wird der Gegenstand der Erfindung anhand von Beispielen näher erläutert.

### Beispiele:

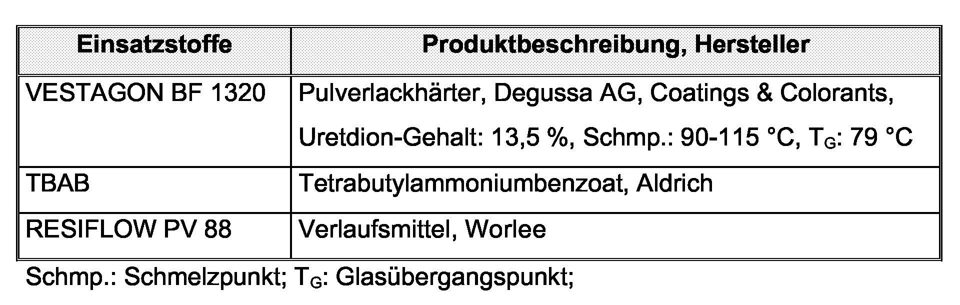

### Polyurethanzusammensetzungen [Pulverlack] (Angaben in Gew.-%):

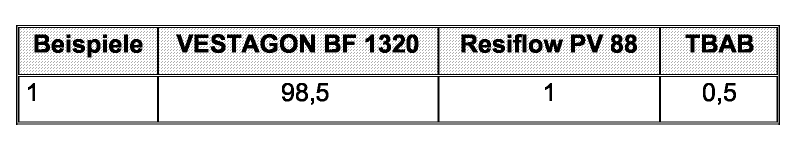

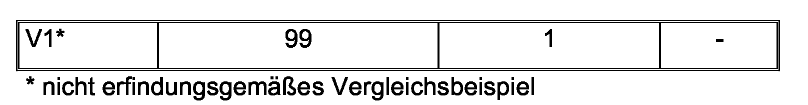

### Allgemeine Herstellungsvorschrift für die Pulverlacke:

Die zerkleinerten Einsatzstoffe - Pulverlackhärter, Katalysatoren, Verlaufsmittel - werden in einem Kollergang innig vermischt und anschließend im Extruder bis maximal 130 °C homogenisiert. Nach dem Erkalten wird das Extrudat gebrochen und mit einer Stiftsmühle auf eine Korngröße < 100 µm gemahlen. Das so hergestellte Pulver wird mit einer elektrostatischen Pulverspritzanlage bei 60 KV auf entfettete Eisenbleche appliziert und in einem Umlufttrockenschrank 30 Minuten bei 150 °C eingebrannt. (Schichtdicke 70 bis 80 µm)

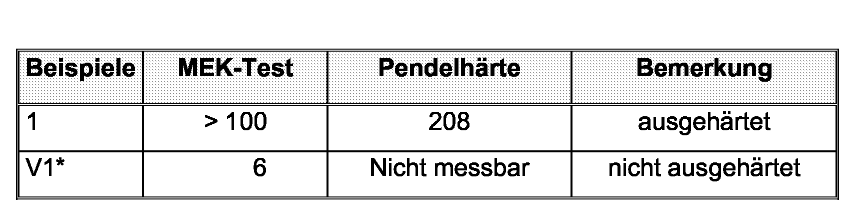

## Patentansprüche

1. Hochreaktive uretdiongruppenhaltige Polyurethanzusammensetzungen mit einem Schmelzpunkt oberhalb von 40 °C, im Wesentlichen enthaltend
A) mindestens einen uretdiongruppenhaltigen Härter, basierend auf aliphatischen, (cyclo)aliphatischen und/oder cycloaliphatischen Polyisocyanaten und hydroxylgruppenhaltigen Verbindungen mit einem freien NCO-Gehalt von kleiner 5 Gew.-% und einem Uretdiongehalt von 1 bis 18 Gew.-%
und
B) mindestens einen Katalysator aus der Gruppe der Katalysatoren
1. der Formel [NR¹R²R³R⁴]⁺ [R⁵COO]⁻, wobei R¹ bis R⁴ gleichzeitig oder unabhängig voneinander Alkyl-, Aryl-, Aralkyl-, Heteroaryl-, Alkoxyalkylreste, jeweils linear oder verzweigt, unverbrückt oder mit anderen Resten R¹ bis R⁴ verbrückt, unter Ausbildung von Cyclen, Bicyclen oder Tricyclen und die Verbrückungsatome neben Kohlenstoff auch Heteroatome sein können, mit 1 bis 18 Kohlenstoffatomen bedeuten und jeder Rest R¹ bis R⁴ zusätzlich noch eine oder mehrere Alkohol-, Amino-, Ester-, Keto-, Thio-, Urethan-, Harnstoff-, Allophanatgruppen, Doppelbindungen, Dreifachbindungen oder Halogenatome aufweisen kann, und R⁵ ein Alkyl-, Aryl-, Aralkyl-, Heteroaryl-, Alkoxyalkylrest, linear oder verzweigt, mit 1 bis 18 Kohlenstoffatomen darstellt und zusätzlich noch eine oder mehrere Alkohol-, Amino-, Ester-, Keto-, Thio-, Säure-, Urethan-, Harnstoff-, Allophanatgruppen, Doppelbindungen, Dreifachbindungen oder Halogenatome aufweisen kann,
2. der Formel [NR¹R²R³R⁴]⁺ [R⁵]⁻, wobei R¹ bis R⁴ gleichzeitig oder unabhängig voneinander Alkyl-, Aryl-, Aralkyl-, Heteroaryl-, Alkoxyalkylreste, jeweils linear oder verzweigt, unverbrückt oder mit anderen Resten R¹ bis R⁴ verbrückt, unter Ausbildung von Cyclen, Bicyclen oder Tricyclen und die Verbrückungsatome neben Kohlenstoff auch Heteroatome sein können, mit 1 bis 18 Kohlenstoffatomen darstellen und jeder Rest R¹ bis R⁴ zusätzlich noch eine oder mehrere Alkohol-, Amino-, Ester-, Keto-, Thio-, Säure-, Urethan-, Harnstoff-, Allophanatgruppen, Doppelbindungen, Dreifachbindungen oder Halogenatome aufweisen kann, und R⁵ entweder OH oder F bedeutet,
3. der Formel M (OR¹)ₙ (OR²)ₘ (OR³)ₒ (OR⁴)ₚ (OR⁵)_{q} (OR⁶)ᵣ, wobei M ein Metall in beliebiger positiver Oxidationsstufe und identisch mit der Summe n+m+o+p+q+r ist, m, o, p, q, r ganze Zahlen von 0 bis 6 darstellen und für die Summe n+m+o+p+q+r = 1 bis 6 gilt, die Reste R¹ bis R⁶ gleichzeitig oder unabhängig voneinander Wasserstoff oder Alkyl-, Aryl-, Aralkyl-, Heteroaryl-, Alkoxyalkylreste mit 1 bis 8 Kohlenstoffatomen bedeuten und die Reste jeweils linear oder verzweigt, unverbrückt oder mit anderen Resten verbrückt, unter Ausbildung von Cyclen, Bicyclen oder Tricyclen und die Verbrückungsatome neben Kohlenstoff auch Heteroatome sein können und zusätzlich noch eine oder mehrere Alkohol-, Amino-, Ester-, Keto-, Thio-, Säure-, Urethan-, Harnstoff-, Allophanatgruppen, Doppelbindungen, Dreifachbindungen oder Halogenatome aufweisen können
wobei diese Katalysatoren aus den Gruppen 1 bis 3 einzeln oder in Mischungen mit einer inerten Hülle umgeben und damit verkapselt sein können;
C) gegebenenfalls mindestens ein hydroxylgruppenhaltiges oder amingruppenhaltiges Polymer mit einer OH-Zahl zwischen 20 und 500 mg KOH/Gramm bzw. einem vergleichbaren Amingehalt;
D) gegebenenfalls mindestens eine gegenüber Säuregruppen reaktive Verbindung mit einem Gewichtsanteil, bezogen auf die Gesamtformulierung, von 0,1 bis 10 %;
E) gegebenenfalls mindestens eine Säure in monomerer oder polymerer Form in einem Gewichtsanteil, bezogen auf die Gesamtformulierung, von 0,1 bis 10 %;
F) gegebenenfalls Hilfs- und Zusatzstoffe;
wobei der Anteil des Katalysators unter B) 0,001 bis 5 Gew.-% an der Gesamtmenge der Komponenten beträgt.

2. Polyurethanzusammensetzung nach Anspruch 1,
**dadurch gekennzeichnet,**
**dass** die beiden Komponenten A) und C) in dem Verhältnis vorliegen, dass auf jede Hydroxylgruppe bzw. Aminogruppe der Komponente C) mehr als 1 Uretdiongruppe der Komponente A) entfällt.

3. Polyurethanzusammensetzung nach mindestens einem der vorhergehenden Ansprüche,
**dadurch gekennzeichnet,**
**dass** als Einsatzstoffe für die Komponenten A) Uretdiongruppen enthaltende Polyisocyanate, ausgewählt aus Isophorondiisocyanat (IPDI), Hexamethylendiisocyanat (HDI), 2-Methylpentandiisocyanat (MPDI), 2,2,4-Trimethylhexamethylendiisocyanat/2,4,4-Trimethylhexamethylendiisocyanat (TMDI), Norbornandiisocyanat (NBDI), Methylendiphenyldiisocyanat (MDI) und/oder Tetramethylxylylendiisocyanat (TMXDI), eingesetzt werden.

4. Polyurethanzusammensetzung nach Anspruch 3,
**dadurch gekennzeichnet,**
**dass** IPDI und/oder HDI eingesetzt werden.

5. Polyurethanzusammensetzung nach mindestens einem der vorhergehenden Ansprüche,
**dadurch gekennzeichnet,**
**dass** als Einsatzstoffe für die Uretdiongruppen aufweisenden Härter A) hydroxylgruppenhaltige Monomere und/oder Polymere eingesetzt werden.

6. Polyurethanzusammensetzung nach Anspruch 5,
**dadurch gekennzeichnet,**
**dass** hydroxylgruppenhaltige Verbindungen, ausgewählt aus Polythioethern, Polyethern, Polycaprolactamen, Polyepoxiden, Polyesteramiden, Polyurethanen und/oder niedermolekularen Di-, Tri- und/oder Tetraalkoholen als Kettenverlängerer und/oder gegebenenfalls Monoaminen und/oder Monoalkoholen als Kettenabbrecher, eingesetzt werden.

7. Polyurethanzusammensetzung nach mindestens einem der vorhergehenden Ansprüche,
**dadurch gekennzeichnet,**
**dass** die Härter A) einen freien NCO-Gehalt von weniger als 5 Gew.-% und einen Gehalt an Urediongruppen von 1 bis 18 Gew.-% (berehcnet als C₂N₂O₂, Molekulargewicht 84) aufweisen.

8. Polyurethanzusammensetzung nach mindestens einem der vorhergehenden Ansprüche,
**dadurch gekennzeichnet,**
**dass** die Härter A) auch Isocyanurat-, Biuret-, Allophanat-, Urethan- und/oder Harnstoff-Strukturen aufweisen.

9. Polyurethanzusammensetzung nach mindestens einem der vorhergehenden Ansprüche,
**dadurch gekennzeichnet,**
**dass** Katalysatoren 1. ausgewählt aus Tetramethylammoniumformiat, Tetramethylammoniumacetat, Tetramethylammoniumpropionat, Tetramethylammoniumbutyrat, Tetramethylammoniumbenzoat, Tetraethylammoniumformiat, Tetraethylammoniumacetat, Tetraethylammoniumpropionat, Tetraethylammoniumbutyrat, Tetraethylammoniumbenzoat, Tetrapropylammoniumformiat, Tetrapropylammoniumacetat, Tetrapropylammoniumpropionat, Tetrapropylammoniumbutyrat, Tetrapropylammoniumbenzoat Tetrabutylammoniumformiat, Tetrabutylammoniumacetat, Tetrabutylammoniumpropionat, Tetrabutylammoniumbutyrat und/oder Tetrabutylammoniumbenzoat eingesetzt werden.

10. Polyurethanzusammensetzung nach mindestens einem der vorhergehenden Ansprüche,
**dadurch gekennzeichnet,**
**dass** Katalysatoren 2. ausgewählt aus Methyltributylammoniumhydroxid, Methyltriethylammoniumhydroxid, Tetramethylammoniumhydroxid, Tetraethylammoniumhydroxid, Tetrapropylammoniumhydroxid, Tetrabutylammoniumhydroxid, Tetrapentylammoniumhydroxid, Tetrahexylammoniumhydroxid, Tetraoctylammoniumhydroxid, Tetradecylammoniumhydroxid, Tetradecyltrihexylammoniumhydroxid, Tetraoctadecylammoniumhydroxid, Benzyltrimethylammoniumhydroxid, Benzyltriethylammoniumhydroxid, Trimethylphenylammoniumhydroxid, Triethylmethylammoniumhydroxid, Trimethylvinylammoniumhydroxid, Tetramethylammoniumfluorid, Tetraethylammoniumfluorid, Tetrabutylammoniumfluorid, Tetraoctylammoniumfluorid und/oder Benzyltrimethylammoniumfluorid eingesetzt werden.

11. Polyurethanzusammensetzung nach mindestens einem der vorhergehenden Ansprüche,
**dadurch gekennzeichnet,**
**dass** Katalysatoren 3. ausgewählt aus Lithiumhydroxid, Natriumhydroxid, Kaliumhydroxid, Rubidiumhydroxid, Cäsiumhydroxid, Berylliumiumhydroxid, Magnesiumhydroxid, Calziumhydroxid, Strontiumhydroxid, Bariumhydroxid, Aluminiumhydroxid, Zinkhydroxid, Lithiummethanolat, Natriummethanolat, Kaliummethanolat, Magnesiummethanolat, Calziummethanolat, Bariummethanolat, Lithiumethanolat, Natriumethanolat, Kaliumethanolat, Magnesiumethanolat, Calziumethanolat, Bariumethanolat, Lithiumpropylalkoholat, Natriumpropylalkoholat, Kaliumpropylalkoholat, Magnesiumpropylalkoholat, Calziumpropylalkoholat, Bariumpropylalkoholat, Lithiumisopropylalkoholat, Natriumisopropylalkoholat, Kaliumisopropylalkoholat, Magnesiumisopropylalkoholat, Calziumisopropylalkoholat, Bariumisopropylalkoholat, Lithium-1-butylalkoholat, Natrium-1-butylalkoholat, Kalium-1-butylalkoholat, Magnesium-1-butylalkoholat, Calzium-1-butylalkoholat, Barium-1-butylalkoholat, Lithium-2-butylalkoholat, Natrium-2-butylalkoholat, Kalium-2-butylalkoholat, Magnesium-2-butylalkoholat, Calzium-2-butylalkoholat, Barium-2-butylalkoholat, Lithiumisobutylalkoholat, Natriumisobutylalkoholat, Kaliumisobutylalkoholat, Magnesiumisobutylalkoholat, Calziumisobutylalkoholat, Bariumisobutylalkoholat, Lithium-tert.-butylalkoholat, Natrium-tert.-butylalkoholat, Kalium-tert.-butylalkoholat, Magnesium-tert.-butylalkoholat, Calzium-tert.-butylalkoholat, Barium-tert.-butylalkoholat, Lithiumphenolat, Natriumphenolat, Kaliumphenolat, Magnesiumphenolat, Calziumphenolat und/oder Bariumphenolat eingesetzt werden.

12. Polyurethanzusammensetzung nach mindestens einem der vorhergehenden Ansprüche,
**dadurch gekennzeichnet,**
**dass** als Katalysatoren Tetraethylammoniumbenzoat und Tetrabutylammoniumhydroxid eingesetzt werden.

13. Polyurethanzusammensetzung nach mindestens einem der vorhergehenden Ansprüche,
**dadurch gekennzeichnet,**
**dass** Katalysatoren in einer Menge von 0,001 bis 5 Gew.-%, bezogen auf die Gesamtmenge der Komponenten enthalten sind.

14. Polyurethanzusammensetzung nach mindestens einem der vorhergehenden Ansprüche,
**dadurch gekennzeichnet,**
**dass** als hydroxylgruppen- oder amingruppenhaltige Polymeren C) Polyester, Polyether, Polyacrylate, Polyurethane, Polyamidamine, Polyether und/oder Polycarbonate mit einer OH-Zahl von 20 bis 500 (in mg KOH/Gramm) bzw. einem vergleichbaren Amingehalt eingesetzt werden.

15. Polyurethanzusammensetzung nach Anspruch 14,
**dadurch gekennzeichnet,**
**dass** Polyester mit einer OH-Zahl von 30 bis 150 und einem mittleren Molekulargewicht von 500 bis 6 000 g/mol eingesetzt werden.

16. Polyurethanzusammensetzung nach mindestens einem der vorhergehenden Ansprüche,
**dadurch gekennzeichnet,**
**dass** als reaktive säureabfangende Verbindungen D) Epoxyverbindungen, Carbodiimide, Hydroxyalkylamide oder 2-Oxazoline, anorganische Salze, wie Hydroxide, Hydrogencarbonate und/oder Carbonate, eingesetzt werden.

17. Polyurethanzusammensetzung nach Anspruch 16,
**dadurch gekennzeichnet,**
**dass** Triglycidyletherisocyanurat (TGIC), EPIKOTE® 828 (Diglycidylether auf Basis Bisphenol A, Shell), Versaticsäureglycidylester, Ethylhexylglycidylether, Butylglycidylether, Polypox R 16 (Pentaerythrittetraglycidylether, UPPC AG) Hydroxyalkylamid, Phenylenbisoxazolin, 2-Methyl-2-oxazolin, 2-Hydroxyethyl-2-oxazolin, 2-Hydroxypropyl-2-oxazolin, 5-Hydroxypentyl-2-oxazolin, Natriumcarbonat und/oder Calciumcarbonat eingesetzt werden.

18. Polyurethanzusammensetzung nach mindestens einem der vorhergehenden Ansprüche,
**dadurch gekennzeichnet,**
**dass** als Komponente E) Schwefelsäure, Essigsäure, Benzoesäure, Malonsäure, Terephthalsäure und/oder Copolyester und/oder Copolyamide mit einer Säurezahl von mindestens 20 eingesetzt werden.

19. Polyurethanzusammensetzung nach mindestens einem der vorhergehenden Ansprüche,
**dadurch gekennzeichnet,**
**dass** als Komponente F) Verlaufsmittel, Lichtschutzmittel, Füllstoffe und Pigmente zugesetzt werden.

20. Polyurethanzusammensetzung nach mindestens einem der vorhergehenden Ansprüche,
**dadurch gekennzeichnet,**
**dass** zusätzliche Katalysatoren, ausgewählt aus metallorganischen Katalysatoren oder tertiärem Amin, eingesetzt werden.

21. Verfahren zur Herstellung von Polyurethanzusammensetzungen nach mindestens einem der vorherigen Ansprüche in beheizbaren Aggregaten bei Temperaturen unterhalb von 130 °C.

22. Verwendung der Polyurethanzusammensetzung nach mindestens einem der Ansprüche 1 bis 20 zur Herstellung von Beschichtungen auf Metall-, Kunststoff-, Glas-, Holz- oder Ledersubstraten.

23. Verwendung der Polyurethanzusammensetzung nach mindestens einem der Ansprüche 1 bis 20 zur Herstellung von Verklebungen auf Metall-, Kunststoff-, Glas-, Holz- oder Ledersubstraten oder sonstigen hitzeresistenten Untergründen.

24. Metallbeschichtungszusammensetzungen , Holzbeschichtungszusammensetzungen, Glasbeschichtungszusammensetzungen, Lederbeschichtungszusammensetzungen und Kunststoffbeschichtungszusammensetzungen, welche eine Polyurethanzusammensetzung nach mindestens einem der Ansprüche 1 bis 20 enthalten.

25. Verwendung mindestens eines Katalysators aus der Gruppe der Katalysatoren
1. der Formel [NR¹R²R³R⁴]⁺ [R⁵COO]⁻, wobei R¹ bis R⁴ gleichzeitig oder unabhängig voneinander Alkyl-, Aryl-, Aralkyl-, Heteroaryl-, Alkoxyalkylreste, jeweils linear oder verzweigt, unverbrückt oder mit anderen Resten R¹ bis R⁴ verbrückt, unter Ausbildung von Cyclen, Bicyclen oder Tricyclen und die Verbrückungsatome neben Kohlenstoff auch Heteroatome sein können, mit 1 bis 18 Kohlenstoffatomen bedeuten und jeder Rest R¹ bis R⁴ zusätzlich noch eine oder mehrere Alkohol-, Amino-, Ester-, Keto-, Thio-, Urethan-, Harnstoff-, Allophanatgruppen, Doppelbindungen, Dreifachbindungen oder Halogenatome aufweisen kann und R⁵ ein Alkyl-, Aryl-, Aralkyl-, Heteroaryl-, Alkoxyalkylrest, linear oder verzweigt, mit 1 bis 18 Kohlenstoffatomen darstellt und zusätzlich noch eine oder mehrere Alkohol-, Amino-, Ester-, Keto-, Thio-, Säure-, Urethan-, Harnstoff-, Allophanatgruppen, Doppelbindungen, Dreifachbindungen oder Halogenatome aufweisen kann,
2. der Formel [NR¹R²R³R⁴]⁺ [R⁵]⁻, wobei R¹ bis R⁴ gleichzeitig oder unabhängig voneinander Alkyl-, Aryl-, Aralkyl-, Heteroaryl-, Alkoxyalkylreste, jeweils linear oder verzweigt, unverbrückt oder mit anderen Resten R¹ bis R⁴ verbrückt, unter Ausbildung von Cyclen, Bicyclen oder Tricyclen und die Verbrückungsatome neben Kohlenstoff auch Heteroatome sein können, mit 1 bis 18 Kohlenstoffatomen darstellen und jeder Rest R¹ bis R⁴ zusätzlich noch eine oder mehrere Alkohol-, Amino-, Ester-, Keto-, Thio-, Säure-, Urethan-, Harnstoff-, Allophanatgruppen, Doppelbindungen, Dreifachbindungen oder Halogenatome aufweisen kann und R⁵ entweder OH oder F bedeutet,
3. der Formel M (OR¹)ₙ (OR²)ₘ (OR³)ₒ (OR⁴)ₚ (OR⁵)_{q} (OR⁶)ᵣ, wobei M ein Metall in beliebiger positiver Oxidationsstufe und identisch mit der Summe n+m+o+p+q+r ist, m, o, p, q, r ganze Zahlen von 0 bis 6 darstellen und für die Summe n+m+o+p+q+r = 1 bis 6 gilt, die Reste R¹ bis R⁶ gleichzeitig oder unabhängig voneinander Wasserstoff oder Alkyl-, Aryl-, Aralkyl-, Heteroaryl-, Alkoxyalkylreste mit 1 bis 8 Kohlenstoffatomen bedeuten und die Reste jeweils linear oder verzweigt, unverbrückt oder mit anderen Resten verbrückt, unter Ausbildung von Cyclen, Bicyclen oder Tricyclen und die Verbrückungsatome neben Kohlenstoff auch Heteroatome sein können und zusätzlich noch eine oder mehrere Alkohol-, Amino-, Ester-, Keto-, Thio-, Säure-, Urethan-, Harnstoff-, Allophanatgruppen, Doppelbindungen, Dreifachbindungen oder Halogenatome aufweisen können,
in Polyurethan-Lack- und Klebstoffzusammensetzungen.

26. Polyurethan-Pulverlackzusammensetzung oder Klebstoffzusammensetzung, enthaltend Polyurethanzusammensetzungen nach mindestens einem der Ansprüche 1 bis 20.
